(19) Europäisches Patentamt / European Patent Office / Office européen des brevets

(11) **EP 4 371 950 B1**

(12) **EUROPEAN PATENT SPECIFICATION**

(45) Date of publication and mention
of the grant of the patent:
**28.01.2026 Bulletin 2026/05**

(21) Application number: **22879622.3**

(22) Date of filing: **29.11.2022**

(51) International Patent Classification (IPC):
**C03B 37/023** (2006.01)    **C03B 37/014** (2006.01)
**C03B 37/027** (2006.01)    **C03C 25/10** (2018.01)
**G02B 6/036** (2006.01)

(52) Cooperative Patent Classification (CPC):
**C03B 37/01473; C03B 37/02727; C03C 25/106;**
**G02B 6/03616; G02B 6/03638;** C03B 2201/12;
C03B 2201/31; C03B 2203/22; C03B 2203/223;
C03B 2203/23; C03B 2205/55

(86) International application number:
**PCT/CN2022/135125**

(87) International publication number:
**WO 2024/066003 (04.04.2024 Gazette 2024/14)**

(54) **OPTICAL FIBER AND MANUFACTURING METHOD THEREFOR**

OPTISCHE FASER UND HERSTELLUNGSVERFAHREN DAFÜR

FIBRE OPTIQUE ET SON PROCÉDÉ DE FABRICATION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **30.09.2022 CN 202211215689**

(43) Date of publication of application:
**22.05.2024 Bulletin 2024/21**

(73) Proprietors:
• **Zhongtian Technology Fibre Optics Co., Ltd.**
**Nantong, Jiangsu 226000 (CN)**
• **Jiangdong Technology Co., Ltd.**
**Nantong, Jiangsu 226400 (CN)**
• **Jiangsu Zhongtian Technology Co., Ltd.**
**Nantong, Jiangsu 226000 (CN)**
• **Zhongtian Technology Advanced Materials Co.,**
**Ltd.**
**Nantong, Jiangsu 226000 (CN)**

(72) Inventors:
• **ZHU, Qiansheng**
**Nantong, Jiangsu 226000 (CN)**

• **DING, Chunlai**
**Nantong, Jiangsu 226000 (CN)**
• **SHI, Zhengan**
**Nantong, Jiangsu 226000 (CN)**
• **XU, Haitao**
**Nantong, Jiangsu 226000 (CN)**
• **CAO, Shanshan**
**Nantong, Jiangsu 226000 (CN)**
• **LIU, Zhizhong**
**Nantong, Jiangsu 226000 (CN)**

(74) Representative: **Fuchs Patentanwälte**
**Partnerschaft mbB**
**Tower 185**
**Friedrich-Ebert-Anlage 35-37**
**60327 Frankfurt am Main (DE)**

(56) References cited:
CN-A- 111 323 872      CN-A- 113 582 534
CN-A- 113 716 862      CN-A- 114 994 830
US-A1- 2012 014 654

## Description

## Technical Field

The present disclosure relates to the technical field of optical fiber preparation, in particular to an optical fiber and a preparation method thereof.

## Background

In the related art, an inner cladding commonly adopted in optical fibers is designed as a platform type, and although the matching between a core layer and a sinking layer may be improved to some extent, a matching improvement effect is limited. At present, a design of a deep recess layer is usually adopted to enhance the bending resistance of the optical fiber, but this design is difficult and costly to implement, and is mostly implemented by Modified Chemical Vapor Deposition (MCVD) or Plasma Chemical Vapor Deposition (PCVD), which requires process switching and high device cost. Furthermore, a preform may be directly cooled to room temperature after collapsing, and there is a potential safety hazard. In the existing drawing technology, after a holding furnace enables the temperature of the optical fiber to drop to a fictive temperature by gradient, the optical fiber is usually directly cooled to room temperature in air, but in practice, a reaction on the surface of a glass fiber is still going on, the non-uniformity within the optical fiber is still increasing, and optical fiber attenuation and other performance parameters are affected.

CN 111323872 A disclosed a fine-diameter optical fibre, comprising a core layer, an optical cladding layer, a concave layer, an outer cladding layer and a coating layer in sequence from inside to outside; the relative refractive index difference of the core layer was 0.3 to 0.35%, the relative refractive index difference of the optical cladding gradually changed from inside to outside, and the gradually changed range was +0.05 to -0.10%, the relative refractive index difference of the concave layer was 0.35% when a fixed value was used, and the relative refractive index difference of the outer cladding was 0. The preparation method was as follows: sequentially preparing to obtain a core layer, an optical cladding layer and a concave layer to obtain a core rod; performing high-temperature homogenization on the core rod, and then decreasing the temperature to not more than 1000°C and then naturally cooling same; preparing an outer cladding layer on the surface of the mandrel after the homogenizing treatment at high temperature to obtain a preform; and preparing a coating layer on the surface of the preform to obtain a fine-diameter optical fibre.

CN 113582534 A disclosed a optical fibre, comprising a fibre core, a depressed layer, an outer cladding layer and a coating layer from inside to outside, wherein a phase refractive index difference of the fibre core was 0.34% to 0.38%, a phase refractive index difference of the depressed layer was -0.07% to -0.1%, and the outer cladding layer was made of silica. The preparation method was as follows: forming an optical fiber main body by melting and drawing an optical fiber preform in a target wire drawing tension range, a temperature in a wire drawing furnace being 1800°C-2200°C; annealing the main body of the optical fibre; the residence time in the annealing device being 0.067s-0.3 s, and the temperature in the annealing device being 1400°C-1700°C; coating the annealed optical fiber main body to form an inner coating layer and an outer coating layer; and curing the coated optical fiber main body to form an optical fiber.

The foregoing technical solutions can all produce an optical fiber with good performance, but the internal stress of the optical fiber still needs to be reduced, so as to further improve the attenuation performance and mechanical performance of the optical fiber.

## Summary

The main object of the present disclosure is to provide an optical fiber and a preparation method thereof, so as to solve the problems of excessive internal stress of the optical fiber, attenuation and strength degradation of the optical fiber, and poor bending resistance of the optical fiber caused by a viscosity mismatch between different layers in the related art.

In order to achieve the above object, according to an aspect of the present invention, a preparation method of an optical fiber is provided in claim 1.

The optical fiber includes a core layer, a cladding and a coating layer in sequence from inside to outside, the cladding including an inner cladding, a sinking layer and an outer cladding in sequence from inside to outside. The preparation method includes the following steps: S1, preparing the core layer, the inner cladding and the sinking layer in sequence using a Vapor Axial Deposition (VAD) process, and preparing the outer cladding using an Outside Vapor Deposition (OVD) process to obtain an optical fiber preform precursor; S2, collapsing the optical fiber preform precursor, then cooling to 800-950 °C at a cooling rate of 1.5-2.5 °C /s, holding for 1-5min, and then cooling to room temperature to obtain an optical fiber preform; S3, performing melting and drawing on the optical fiber preform, and then annealing in an atmosphere of an inert gas to obtain a bare fiber; and S4, coating the bare fiber to obtain the bare fiber having the coating layer on the surface, and then curing to obtain the optical fiber.

A relative refractive index difference of silicon dioxide is set to be 0, and the relative refractive index difference $\Delta n1$

of the core layer is 0.34-0.38%. The relative refractive index difference $\Delta n2$ of the inner cladding decreases linearly from inside to outside, the relative refractive index difference $\Delta n2$-1 close to the core layer is 0.04-0.1%, and the relative refractive index difference $\Delta n2$-2 close to the sinking layer is 0 to -0.02%. The material of the sinking layer is fluorine-doped silicon dioxide, and the relative refractive index difference $\Delta n3$ of the sinking layer is -0.07 to -0.1%. The relative refractive index difference $\Delta n4$ of the outer cladding is 0.

Further, the material of the core layer is germanium-doped silicon dioxide, and the thickness of one side of the core layer is 4.5-4.9$\mu$m; and/or, the material of the inner cladding is germanium-doped silicon dioxide, and the thickness of one side of the inner cladding is 7.5-12$\mu$m; and/or, the thickness of one side of the sinking layer is 8-15$\mu$m; and/or, the material of the outer cladding is pure silicon dioxide, and the thickness of one side of the outer cladding is 62-63$\mu$m.

Further, the diameter of the optical fiber preform precursor is 200-300mm, and the diameter of the optical fiber preform is 40-60% of that of the optical fiber preform precursor.

Further, in S2, the collapsing temperature is 1900-2200 °C, the collapsing atmosphere is a mixed atmosphere of the inert gas and oxygen, and the inert gas is one or more of nitrogen, helium, and argon. Preferably, the volume percentage content of oxygen in the collapsing atmosphere is 0-50%, and the gas flow rate of the collapsing atmosphere is 6-12L/min.

Further, in S3, the melting temperature is 1800-2200 °C, and the melting atmosphere is helium and/or argon. Preferably, the volume percentage content of helium in the melting atmosphere is 0-40%, the oxygen volume concentration in the melting atmosphere is <50ppm, and the gas flow rate of the melting atmosphere is 15-50L/min.

Further, in S3, the annealing includes a first annealing and a second annealing that are performed in sequence. The first annealing includes n times of thermal insulation annealing, where $2 \le n \le 5$, and the temperatures of the first thermal insulation annealing to the nth thermal insulation annealing successively decrease. Preferably, the temperature of the first thermal insulation annealing is 1400-1700 °C, the temperature of the nth thermal insulation annealing is 850-1000 °C, and the total time of the first annealing is 0.1-1s. The second annealing is a natural cooling process. Preferably, the temperature of the bare fiber obtained through the second annealing is 100-200 °C. More preferably, the oxygen volume concentration in the atmosphere of the inert gas is <200ppm and the gas flow rate of the atmosphere of the inert gas is 5-25L/min.

Further, in S4, the coating layer includes an inner coating layer close to the bare fiber and an outer coating layer far from the bare fiber. Preferably, the coating material of the inner coating layer is a first acrylic resin, the elastic modulus is $\le$ 1.5Mpa, the viscosity at 25 °C is 3000-8000mPa·s, the density is 0.95-1.3g/cm$^3$, and the elongation at break is $\ge$ 115%. Preferably, the coating material of the outer coating layer is a second acrylic resin, the elastic modulus is $\ge$ 550Mpa, the viscosity at 25 °C is 3000-8000mPa·s, the density is 0.95-1.3g/cm$^3$, and the elongation at break is $\ge$ 5%.

Further, in S4, the curing is Ultraviolet (UV) curing or Light Emitting Diode (LED) curing. Preferably, the curing atmosphere is one or more of nitrogen, helium and argon, the oxygen volume concentration in the curing atmosphere is <50ppm, and the gas flow rate of the curing atmosphere is 10-25L/min. More preferably, the degree of cure of the inner coating layer is 85-95% and the degree of cure of the outer coating layer is 92-100%.

According to another aspect of the present invention, an optical fiber, obtained by the preparation method of the present disclosure, is provided. The optical fiber includes a core layer, a cladding and a coating layer in sequence from inside to outside, the cladding including an inner cladding, a sinking layer and an outer cladding in sequence from inside to outside. A relative refractive index difference of silicon dioxide is set to be 0, and the relative refractive index difference $\Delta n1$ of the core layer is 0.34-0.38%. The relative refractive index difference $\Delta n2$ of the inner cladding decreases linearly from inside to outside, the relative refractive index difference $\Delta n2$-1 close to the core layer is 0.04-0.1%, and the relative refractive index difference $\Delta n2$-2 close to the sinking layer is 0 to -0.02%. The material of the sinking layer is fluorine-doped silicon dioxide, and the relative refractive index difference $\Delta n3$ of the sinking layer is -0.07 to -0.1%. The relative refractive index difference $\Delta n4$ of the outer cladding is 0.

By applying the technical solution of the present disclosure, when manufacturing the optical fiber preform, by the adoption of a design of the oblique inner cladding combined with a wide recess and shallow fluorine doping, the refractive index difference between the core layer and the sinking layer is effectively reduced, so that the optical fiber has a higher strength, and at the same time, the bending resistance of the optical fiber is increased, so that the bending loss is greatly reduced. The collapsed optical fiber preform adopts a specific cooling process, which not only effectively reduces the internal stress of the optical fiber preform and further improves the overall uniformity of the preform, but also effectively reduces the attenuation. In addition, natural cooling in the inert atmosphere is used instead of conventional cooling in an air environment in the cooling process after melting and drawing, which may reduce unnecessary synthesis of silicon hydroxyl on the surface of the optical fiber, thereby further reducing the internal stress of the optical fiber and effectively reducing the loss of the optical fiber.

## Brief Description of the Drawings

The accompanying drawings of the specification, which constitute a part of the present disclosure, are intended to provide a further understanding of the present disclosure, and the exemplary embodiments of the present disclosure and the description thereof are intended to explain the present disclosure and do not constitute an undue limitation on the present disclosure. In the accompanying drawings:

Fig. 1 shows a schematic structural diagram of an optical fiber according to an embodiment of the present disclosure;

Fig. 2 shows a diagrammatic cross-section of a refractive index of an optical fiber according to an embodiment of the present disclosure; and

Fig. 3 shows a schematic diagram of a drawing device according to an embodiment 1 of the present disclosure.

Herein, the above accompanying drawings include the following reference signs:
A. Core layer; B. Cladding; B1. Inner cladding; B2. Sinking layer; B3. Outer cladding; C. Coating layer; C1. Inner coating layer; C2. Outer coating layer; 1. Preform feeder; 2. Preform; 3. Drawing furnace; 4. Holding furnace; 5. Bare fiber testing device; 6. Bare fiber protection tube; 7. Coating device; 8. Curing oven; 9. Optical fiber size testing device; 10. Take-up device.

## Detailed Description of the Embodiments

It is to be noted that the embodiments in the present disclosure and features in the embodiments may be combined with each other without conflict. The present disclosure is described below with reference to the drawings and in conjunction with the embodiments in detail.

Explanation of terms:

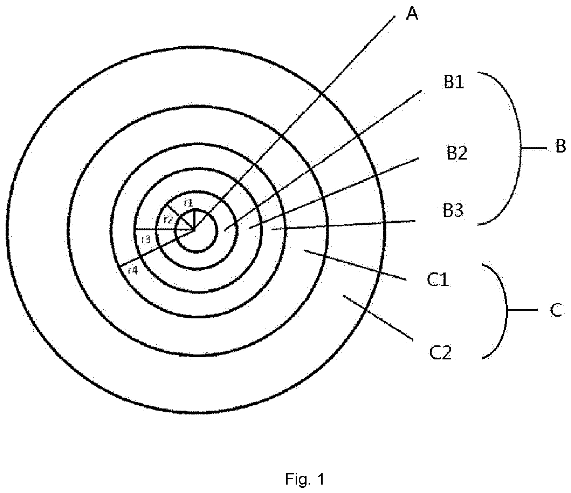

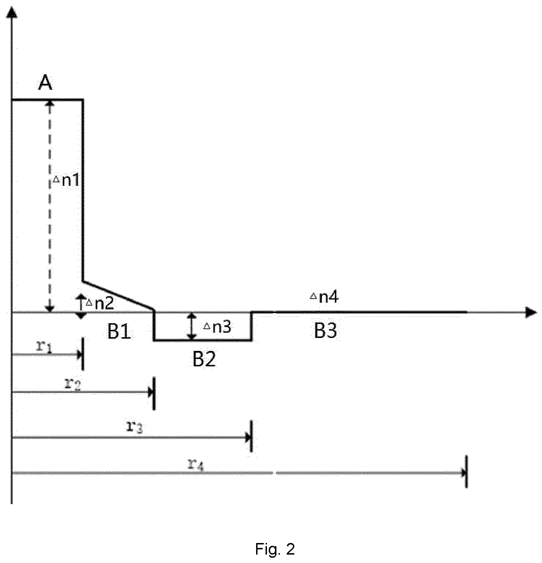

VAD: axial vapor deposition method.
OVD: outside chemical vapor deposition method.
A preparation process of an optical fiber is mainly divided into two parts: optical fiber preform preparation and optical fiber drawing. Optical fiber attenuation is one of the important parameters to evaluate the optical performance of the optical fiber. The main reasons affecting optical fiber attenuation are as follows: 1, the internal non-uniformity of the optical fiber causes irregular changes of a refractive index, and Rayleigh scattering may be formed in the transmission of light in this non-uniform optical fiber, resulting in the loss of light energy in the transmission process; 2, the light is strongly absorbed by some substances in the optical fiber, including metal ions and hydroxyl groups in the optical fiber; and 3, the optical fiber itself has internal defects that cause the loss of the light energy in the transmission process.
As described in Background of the present disclosure, there are problems in the related art of high preparation stress and large bending loss caused by the internal non-uniformity of the optical fiber. In order to solve the above problems, in a typical implementation mode of the present disclosure, a preparation method of an optical fiber is provided, as shown in a schematic structural diagram of the optical fiber in Fig. 1, the optical fiber includes a core layer A, a cladding B and a coating layer C in sequence from inside to outside, the cladding including an inner cladding B1, a sinking layer B2 and an outer cladding B3 in sequence from inside to outside. The preparation method includes the following steps: S1, preparing the core layer, the inner cladding and the sinking layer in sequence using a VAD process, and preparing the outer cladding using an OVD process to obtain an optical fiber preform precursor; S2, collapsing the optical fiber preform precursor, then cooling to 800-950 °C at a cooling rate of 1.5-2.5 °C /s, holding for 1-5min, and then cooling to room temperature to obtain an optical fiber preform; S3, performing melting and drawing on the optical fiber preform, and then annealing in an atmosphere of an inert gas to obtain a bare fiber; and S4, coating the bare fiber to obtain the bare fiber having the coating layer on the surface, and then curing to obtain the optical fiber.
A relative refractive index difference of silicon dioxide is set to be 0, as shown in a diagrammatic cross-section of a refractive index of the optical fiber in Fig. 2, the relative refractive index difference $\Delta n1$ of the core layer is 0.34-0.38%. The relative refractive index difference $\Delta n2$ of the inner cladding decreases linearly from inside to outside, the relative refractive index difference $\Delta n2\text{-}1$ close to the core layer is 0.04-0.1%, and the relative refractive index difference $\Delta n2\text{-}2$ close to the sinking layer is 0 to -0.02%. The material of the sinking layer is fluorine-doped silicon dioxide, and the relative refractive index difference $\Delta n3$ of the sinking layer is -0.07 to -0.1%. The relative refractive index difference $\Delta n4$ of the outer cladding is 0.
The preparation method of the preform adopted in the present disclosure is fully synthetic preform preparation. Firstly, the core layer is prepared using the VAD process, the inner cladding is prepared on the surface of the core layer using the VAD process, the sinking layer is prepared on the surface of the inner cladding using the VAD process, and finally the outer cladding is prepared on the surface of the sinking layer using the OVD process to obtain the optical fiber preform precursor. Subsequently, the optical fiber preform precursor is collapsed to reduce the diameter of the optical fiber preform, and then is cooled to 800-950 °C at the cooling rate of 1.5-2.5 °C /s for 1-5min, and then is cooled to room temperature to obtain the optical fiber preform with a low internal stress. The cross-sectional structure of the optical fiber preform is theoretically consistent with that of the optical fiber. Then, melting is performed on the optical fiber preform, so that the preform changes from a solid state to an intermediate state of the solid state and a liquid state, so as to facilitate drawing. Annealing is performed in the atmosphere of the inert gas after the drawing is completed, which ensures that the internal stress of the optical fiber is eliminated as much as possible, and reduces the formation of silicon hydroxyl and the adhesion of water molecules on the surface of the optical fiber to improve the subsequent coating effect. The obtained bare fiber is coated to form the coating layer on the surface of the bare fiber, and then is cured, so that the coating layer is cured, namely, the low-loss optical fiber of the present disclosure is obtained.

By applying the technical solution of the present disclosure, when manufacturing the optical fiber preform, by the adoption of a design of the oblique inner cladding combined with a wide recess and shallow fluorine doping, the refractive index difference between the core layer and the sinking layer is effectively reduced using the design of the oblique inner cladding, so that the refractive index and viscosity between the two layers are more matched, the optical fiber has a higher strength than a conventional optical fiber, and the strength is improved by more than 50%. By the adoption of a design of a shallow but wide fluorine-doped layer, on the one hand, considering that the VAD method is easier to implement with this design, and at the same time, the bending resistance of the optical fiber is also increased, so that the bending loss is greatly reduced, for example, the bending loss within the radius of 7.5mm is $\leq$ 0.5dB in the 1550nm band, and at the same time, because the fluorine-doped layer is shallower, a mode field diameter value may be increased, and the compatibility with a G.652 optical fiber is stronger, which meets the actual needs at present.

Furthermore, the outer cladding is deposited using the OVD process with high deposition speed and low cost, combined with the subsequent collapsing process, a diameter error of the optical fiber preform may be controlled within a smaller range, such as $\pm$ 2mm, and the uniform diameter of the preform may also ensure that parameters of the optical fiber are more stable. The collapsed optical fiber preform adopts a specific cooling process, which not only effectively reduces the internal stress of the optical fiber preform, but also further improves the overall uniformity of the preform and effectively reduces the attenuation. In addition, natural cooling in the inert atmosphere is used instead of conventional cooling in an air environment in the cooling process after melting and drawing, which may reduce unnecessary synthesis of silicon hydroxyl on the surface of the optical fiber, thereby further reducing the internal stress of the optical fiber and effectively reducing the loss of the optical fiber.

In order to make the material and refractive index setting of each layer of the optical fiber more matched, as shown in Figs. 1 and 2, in a preferred implementation mode, the material of the core layer is germanium-doped silicon dioxide, and the thickness r1 of one side of the core layer is 4.5-4.9$\mu$m; and/or, the material of the inner cladding is germanium-doped silicon dioxide, and the thickness r1-r2 of one side of the inner cladding is 7.5-12$\mu$m; and/or, the thickness r2-r3 of one side of the sinking layer is 8-15$\mu$m; and/or, the material of the outer cladding is pure silicon dioxide, and the thickness r3-r4 of one side of the outer cladding is 62-63$\mu$m. The use of the above materials is more suitable for the preparation using the method of the present disclosure, and at the same time, the width definition of each layer is more universal, so that optical fibers of various size standards are conveniently obtained.

In a preferred implementation mode, the diameter of the optical fiber preform precursor is 200-300mm, and the diameter of the optical fiber preform is 40-60% of that of the optical fiber preform precursor, so that the preparation of the optical fiber is more in line with existing production device and usage requirements.

Multiple round trips are generally required in the collapsing process of the optical fiber preform, and the hole diameter of the center of the preform is gradually reduced under the condition of ensuring the roundness of the preform, until the requirements of burning are met. In a preferred implementation mode, in S2, the collapsing temperature is 1900-2200 °C, the higher melting temperature may shorten the melting time, the collapsing atmosphere is a mixed atmosphere of the inert gas and oxygen, and the inert gas is one or more of nitrogen, helium, and argon. Preferably, the volume percentage content of oxygen in the collapsing atmosphere is 0-50%, and the gas flow rate of the collapsing atmosphere is 6-12L/min, so that the optical fiber preform with uniform structure may be obtained more conveniently and efficiently.

In a preferred implementation mode, in S3, the melting and drawing temperature is 1800-2200 °C so as to further improve the stability of the melting and drawing process. The process may be performed in a drawing furnace, a heating method is graphite heating or induction coil heat generation, the melting environment is filled with a protective gas, and the melting atmosphere is helium and/or argon. Preferably, the volume percentage content of helium in the melting atmosphere is 0-40%, the oxygen volume concentration in the melting atmosphere is <50ppm, and the gas flow rate of the melting atmosphere is 15-50L/min, so that the strength of the optical fiber may be further improved, the structure of the optical fiber may be uniform, and the loss of the optical fiber caused by the formation of impurities may be reduced.

In order to more effectively control the cooling rate in the traveling process of the bare fiber so as to further improve the attenuation performance of the optical fiber, in a preferred implementation mode, in S3, the annealing includes a first annealing and a second annealing that are performed in sequence. The first annealing may be performed in a holding furnace, and the second annealing may be performed in a bare fiber protection tube. The first annealing includes n times of thermal insulation annealing, where $2 \leq n \leq 5$, and the temperatures of the first thermal insulation annealing to the nth thermal insulation annealing successively decrease. Preferably, the temperature of the first thermal insulation annealing is 1400-1700 °C, the temperature of the nth thermal insulation annealing is 850-1000 °C, and the total time of the first annealing is 0.1-1s. The second annealing is a natural cooling process. Preferably, the temperature of the bare fiber obtained through the second annealing is 100-200 °C. More preferably, the oxygen volume concentration in the atmosphere of the inert gas is <200ppm, and the gas flow rate of the atmosphere of the inert gas is 5-25L/min.

When the optical fiber is gradually cooled to room temperature after drawing, the glass viscosity could change from low to high. In this process, the fictive temperature of the optical fiber is critical to the optical fiber attenuation. The fictive temperature is defined as the temperature ($T_f$) at which the glass changes from a softened state to a solidified state. The value of $T_f$ represents the degree of annealing of the optical fiber in the cooling process, the lower the value, the more complete the annealing, and the lower a Rayleigh scattering coefficient due to the rearrangement of molecules and atoms, the closer an attenuation value is to a theoretical limit.

The inventor found that the fictive temperature is affected by the drawing speed in the drawing process of the optical fiber.

$$\frac{1}{T_f} = \frac{1}{T_g} + a_1 In\left(1 - \frac{In\frac{q}{q_0}}{a_2}\right) \quad (1)$$

In formula (1), $a_1$ and $a_2$ are constants related to the material, q is the cooling rate (in K/s), and $q_0 = 1K/s$. It may be readily seen that reducing the cooling rate is an effective method to reduce the fictive temperature of the optical fiber. As described above, the first annealing includes n times of thermal insulation annealing, where $2 \leq n \leq 5$, and the temperatures of the first thermal insulation annealing to the nth thermal insulation annealing successively decrease. Accordingly, n sections of annealing holding furnaces are installed on a path of the optical fiber, the temperature settings of different holding furnaces successively decrease from the top to the bottom by gradient, and the inert gas adopts a circulating manner of upper air intake and lower air exhaust, so that the content of water molecules in the first annealing environment may also be reduced as much as possible while reducing the oxygen content, so as to facilitate subsequent coating. After the first annealing of the optical fiber in the holding furnace is completed, the optical fiber enters the bare fiber protection tube for the second annealing, the whole cooling environment is also completed in the inert gas environment, the circulating manner of upper air intake and lower air exhaust is adopted, and finally when the optical fiber exits the bare fiber protection tube, the temperature of the optical fiber drops to 100-200 °C.

When using the above method for annealing and cooling, firstly, it may be ensured that the internal stress of the optical fiber may be eliminated as much as possible, the reason for requirement in the inert gas environment is that the silicon dioxide and water may react at high temperature, and at the same time, Si-O-H (silicon hydroxyl) is generated. The hazard of silicon hydroxyl is that strong absorption at 1383nm band may cause the attenuation at 1383nm band to significantly increase. Secondly, although a deuterium element may be used to replace a hydrogen element in silicon hydroxyl, the molecular weight of formed Si-O-D is different from the original structure, and the difference in molecular weight may change the refractive index, resulting in an increase in Rayleigh scattering and an increase in optical fiber attenuation. At the same time, cooling in the inert gas environment may reduce the adhesion of water molecules on the surface of the optical fiber and improve the coating effect.

In order to further improve the comprehensive properties of the optical fiber, such as flexibility, bending performance and stretchability, in a preferred implementation mode, in S4, the coating layer includes an inner coating layer C1 close to the bare fiber and an outer coating layer C2 far from the bare fiber. Preferably, the coating material of the inner coating layer is a first acrylic resin, the elastic modulus after curing is $\leq$ 1.5Mpa, the viscosity at 25 °C is 3000-8000mPa·s, the density is 0.95-1.3g/cm$^3$, and the elongation at break is $\geq$ 115%. Preferably, the coating material of the outer coating layer is a second acrylic resin, the elastic modulus after curing is $\geq$ 550Mpa, the viscosity at 25 °C is 3000-8000mPa·s, the density is 0.95-1.3g/cm$^3$, and the elongation at break is $\geq$ 5%. Both the above first acrylic resin and the second acrylic resin are commercially available as long as the above parameter properties are satisfied, that is, it is more suitable to prepare a low-loss optical fiber using the preparation method of the present disclosure.

The curing process may be performed in a curing oven, a first curing is performed after the inner coating layer is completed, the coating of the outer coating layer is performed, and then a second curing is performed. In a preferred implementation mode, in S4, the curing is UV curing or LED curing. Preferably, the curing atmosphere is one or more of nitrogen, helium and argon, the oxygen volume concentration in the curing atmosphere is <50ppm, and the gas flow rate of the curing atmosphere is 10-25L/min. More preferably, after being cured by the curing oven, the degree of cure of the inner coating layer is 85-95% and the degree of cure of the outer coating layer is 92-100%, which is advantageous for better balancing the attenuation resistance and bending loss properties of the optical fiber, while better protecting the inner bare fiber. In the curing process, when the optical fiber passes through different curing ovens, the exposure time in the air environment shall not be more than 0.04s, otherwise the impurity and attenuation of the optical fiber may increase.

In a yet another typical implementation mode of the present disclosure, an optical fiber, obtained by the preparation method of the present disclosure, is also provided. The optical fiber includes a core layer, a cladding and a coating layer in sequence from inside to outside, the cladding including an inner cladding, a sinking layer and an outer cladding in sequence from inside to outside. A relative refractive index difference of silicon dioxide is set to be 0, and the relative refractive index difference $\Delta n1$ of the core layer is 0.34-0.38%. The relative refractive index difference $\Delta n2$ of the inner cladding decreases linearly from inside to outside, the relative refractive index difference $\Delta n2\text{-}1$ close to the core layer is 0.04-0.1%, and the relative refractive index difference $\Delta n2\text{-}2$ close to the sinking layer is 0 to -0.02%. The material of the sinking layer is fluorine-doped silicon dioxide, and the relative refractive index difference $\Delta n3$ of the sinking layer is -0.07 to -0.1%. The relative refractive index difference $\Delta n4$ of the outer cladding is 0.

By the adoption of a design of the oblique inner cladding combined with a wide recess and shallow fluorine doping, the refractive index difference between the core layer and the sinking layer is effectively reduced using the design of the oblique inner cladding, so that the refractive index and viscosity between the two layers are more matched, the optical fiber has a higher strength than a conventional optical fiber, and the strength is improved by more than 50%. By the adoption of a design of a shallow but wide fluorine-doped layer, the bending resistance of the optical fiber is increased, and at the same time, because the fluorine-doped layer is shallower, a mode field diameter value may be increased, and the compatibility with a G.652 optical fiber is stronger, which meets the actual needs at present. The optical fiber is a low-loss optical fiber with good performance and simple preparation.

The present disclosure will be described below in detail in combination with the specific embodiments. These embodiments may not be construed as limiting the scope of the claimed disclosure.

Embodiment 1

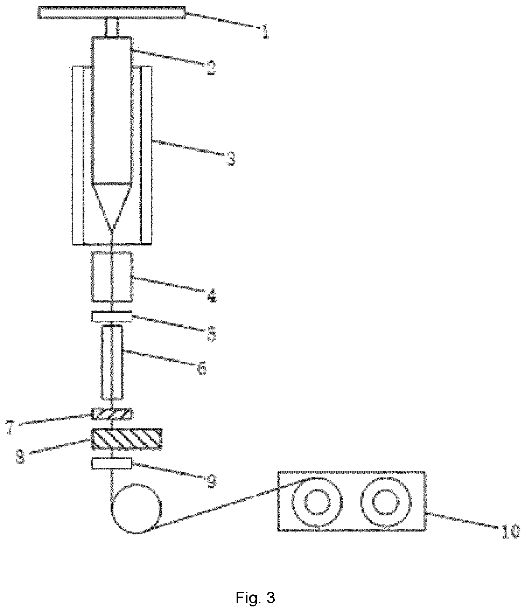

A preparation apparatus of Embodiment1 was shown in Fig. 3.

1. Preform preparation

The cross-sectional structure of an optical fiber preform was theoretically consistent with that of an optical fiber. Fig. 1 showed the cross-sectional structure of the optical fiber and the optical fiber preform. The structure might be mainly classified into:

(1) A core layer r1: a relative refractive index difference of silicon dioxide was set to be 0, after doping, the relative refractive index difference $\Delta n1$ of the core layer was 0.36%, r1 was 4.7$\mu$m, the material thereof was silicon dioxide doped with metal germanium ions, and the core layer was prepared using a VAD method.

(2) An inner cladding r1-r2: a refractive index gradient design was adopted, the refractive index changed linearly, a left end point $\Delta n2\text{-}1$ of the relative refractive index difference was 0.57%, a right end point $\Delta n2\text{-}2$ was -0.01%, the thickness was 10$\mu$m, the material thereof was silicon dioxide doped with metal germanium ions, and the inner cladding was prepared using the VAD method.

(3) A sinking layer r2-r3: the relative refractive index difference $\Delta n3$ was -0.08%, the thickness was 11$\mu$m, the material thereof was fluorine-doped silicon dioxide, and the sinking layer was prepared using the VAD method.

(4) An outer cladding r3-r4: the relative refractive index difference $\Delta n4$ was 0, r3-r4 was 62.5$\mu$m, the material thereof was pure silicon, the outer cladding was prepared using an OVD method, and the cladding was rapidly deposited to obtain an optical fiber preform precursor with a diameter of 250mm.

After the preparation of the optical fiber preform precursor was completed, the preform was subjected to a collapsing treatment and a cooling treatment, which might include the following steps.

(1) Collapsing: the preform was placed in a collapsing furnace, the collapsing furnace was a graphite furnace, the temperature rises to 2100 °C for collapsing, the diameter of the collapsed preform was 120mm, and a mixed gas of nitrogen and high-purity oxygen was introduced into the furnace at a flow rate of 9L/min in the collapsing process. The volume percentage content of oxygen was not higher than 50%.

(2) Cooling: the collapsed preform was slowly cooled to 900 °C for 3min, the cooling rate was controlled to be 2 °C /s, and then the preform was naturally cooled to room temperature in the furnace.

2. Preform melting

Melting was performed on the preform 2 in a drawing furnace 3 at 2050 °C using a preform feeder 1, a heating method was graphite heating, the melting environment was filled with a helium-argon mixed gas, a 5L/min helium + 20L/min argon gas combination method was adopted for continuously introducing gas into the drawing furnace without interruption, and the oxygen concentration in the overall heating atmosphere was less than 50ppm.

3. Optical fiber annealing

1) Annealing of optical fiber in holding furnace

The optical fiber was gradually cooled from the furnace temperature to room temperature after being formed in the drawing furnace, and three sections of holding furnaces 4 were installed on a path of the optical fiber for annealing. The temperature of the first section was 1500 °C and a residence time was 0.2s; the second section was 1250 °C and the residence time was 0.2s; the third section was 950 °C and the residence time was 0.2s, the inlet temperature of the first section was 1600 °C, the outlet temperature of the third section was 920 °C and the drawing speed was 1800m/min. The whole annealing process was completed in an argon atmosphere, the oxygen content was less than 200ppm in the argon atmosphere, the argon flow rate was 15L/min, and a circulating manner of upper air intake and lower air exhaust was adopted.

2) Cooling of optical fiber in bare fiber protection tube

After exited the holding furnace, the optical fiber entered a bare fiber protection tube 6 through a bare fiber testing device 5 for further cooling. The whole cooling environment was also completed in an argon environment, the oxygen content was less than 200ppm in the argon environment, the argon flow rate was 15L/min, and the circulating manner of upper air intake and lower air exhaust was adopted. Finally, when the optical fiber exits the bare fiber protection tube, the temperature of the optical fiber drops to 150 °C.

4. Fiber coating and fiber curing in nitrogen atmosphere

After exited the bare fiber protection tube, the optical fiber was coated with an acrylic resin material in a coating device 7. A first curing was performed in a curing oven 8 after the inner coating layer was completed, coating of the outer coating layer was performed, and then a second curing was performed. The elastic modulus of the inner coating layer after curing was 0.88Mpa, the coating viscosity at 25 °C was 6500mPa·s, the coating density was 1.05g/cm$^3$, and the elongation at break after curing was 140%. The elastic modulus of the outer coating layer after curing was 750Mpa, the viscosity of the coating at 25 °C was 5500mPa·s, the density of the coating was 1.2g/cm$^3$, and the elongation at break after curing was 10%. The curing atmosphere of a single curing furnace was nitrogen, the gas flow rate of the nitrogen was 20L, the oxygen content in the curing environment was less than 50ppm, and the first of twice curing was LED curing with the degree of cure of 93%, and the second was LED curing with the degree of cure of 98%. The diameter of the optical fiber was 195.01mm after the first coating and 242.13mm after the second coating. After passed a test of an optical fiber size testing device 9, a finished optical fiber was taken up and stored by a take-up device 10.

Embodiments 2 to 6

Embodiments 2 to 6 differ from Embodiment 1 in that coating material parameters and curing condition parameters were different, resulting in a difference in the relative degree of cure and affecting the size of the optical fiber after curing of the coating, as detailed in Table 1.

Embodiment 7

1. Preform preparation

(1) A core layer r1: a relative refractive index difference of silicon dioxide was set to be 0, after doping, the relative refractive index difference $\Delta n1$ of the core layer was 0.34%, r1 was 4.5$\mu$m, the material thereof was silicon dioxide doped with metal germanium ions, and the core layer was prepared using a VAD method.

(2) An inner cladding r1-r2: a refractive index gradient design was adopted, the refractive index changed linearly, a left end point $\Delta n2$-1 of the relative refractive index difference was 0.04%, a right end point $\Delta n2$-2 was -0.02%, the thickness was 7.5$\mu$m, the material thereof was silicon dioxide doped with metal germanium ions, and the inner cladding was prepared using the VAD method.

(3) A sinking layer r2-r3: the relative refractive index difference $\Delta n3$ was -0.07%, the thickness was 8$\mu$m, the material thereof was fluorine-doped silicon dioxide, and the sinking layer was prepared using the VAD method.

(4) An outer cladding r3-r4: the relative refractive index difference $\Delta n4$ was 0, r3-r4 was 62$\mu$m, the material thereof was pure silicon, the outer cladding was prepared using an OVD method, and the cladding was rapidly deposited to obtain an optical fiber preform precursor with a diameter of 200mm.

After the preparation of the optical fiber preform precursor was completed, the preform was subjected to a collapsing treatment and a cooling treatment, which might include the following steps.

(1) Collapsing: the preform was placed in a collapsing furnace, the collapsing furnace was a graphite furnace, the temperature rises to 2100 °C for collapsing, the diameter of the collapsed preform was 120mm, and a mixed gas of nitrogen and high-purity oxygen was introduced into the furnace at a flow rate of 6L/min in the collapsing process. The volume percentage content of oxygen was not higher than 50%.

(2) Cooling: the collapsed preform was slowly cooled to 800 °C for 1min, the cooling rate was controlled to be 1.5 °C /s, and then the preform was naturally cooled to room temperature in the furnace.

2. Preform melting

Melting was performed on the preform 2 in a drawing furnace 3 at 1800 °C using a preform feeder 1, a heating method was graphite heating, the melting environment was filled with a helium-argon mixed gas, a 5L/min helium + 10L/min argon gas combination method was adopted for continuously introducing gas into the drawing furnace without interruption, and the oxygen concentration in the overall heating atmosphere was less than 50ppm.

3. Optical fiber annealing

1) Annealing of optical fiber in holding furnace

The optical fiber was gradually cooled from the furnace temperature to room temperature after being formed in the drawing furnace, and three sections of holding furnaces 4 were installed on a path of the optical fiber for annealing. The temperature of the first section was 1500 °C and a residence time was 0.2s; the second section was 1250 °C and the residence time was 0.2s; the third section was 950 °C and the residence time was 0.2s, the inlet temperature of the first section was 1600 °C, the outlet temperature of the third section was 920 °C and the drawing speed was 1800m/min. The whole annealing process was completed in an argon atmosphere, the oxygen content was less than 200ppm in the argon atmosphere, the argon flow rate was 15L/min, and a circulating manner of upper air intake and lower air exhaust was adopted.

2) Cooling of optical fiber in bare fiber protection tube

After exited the holding furnace, the optical fiber entered a bare fiber protection tube 6 through a bare fiber testing device 5 for further cooling. The whole cooling environment was also completed in an argon environment, the oxygen content was less than 200ppm in the argon environment, the argon flow rate was 25L/min, and the circulating manner of upper air intake and lower air exhaust was adopted. Finally, when the optical fiber exits the bare fiber protection tube, the temperature of the optical fiber drops to 100 °C.

4) Fiber coating and fiber curing in nitrogen atmosphere

After exited the bare fiber protection tube, the optical fiber was coated with an acrylic resin material in a coating device 7. A first curing was performed in a curing oven 8 after the inner coating layer was completed, coating of the outer coating layer was performed, and then a second curing was performed. The elastic modulus of the inner coating layer after curing was 0.88Mpa, the coating viscosity at 25 °C was 3000mPa·s, the coating density was 0.95g/cm³, and the elongation at break after curing was 140%. The elastic modulus of the outer coating layer after curing was 750Mpa, the viscosity of the coating at 25 °C was 3000mPa·s, the density of the coating was 0.95g/cm³, and the elongation at break after curing was 10%. The curing atmosphere of a single curing furnace was nitrogen, the gas flow rate of the nitrogen was 10L, the oxygen content in the curing environment was less than 50ppm, and the first of twice curing was LED curing with the degree of cure of 85%, and the second was LED curing with the degree of cure of 92%. The diameter of the optical fiber was 195mm after the first coating and 248mm after the second coating. After passed a test of an optical fiber size testing device 9, a finished optical fiber was taken up and stored by a take-up device 10.

Embodiment 8

1. Preform preparation

(1) A core layer r1: a relative refractive index difference of silicon dioxide was set to be 0, after doping, the relative refractive index difference $\Delta n1$ of the core layer was 0.38%, r1 was 4.9μm, the material thereof was silicon dioxide doped with metal germanium ions, and the core layer was prepared using a VAD method.

(2) An inner cladding r1-r2: a refractive index gradient design was adopted, the refractive index changed linearly, a left end point $\Delta n2-1$ of the relative refractive index difference was 0.1%, a right end point $\Delta n2-2$ was 0%, the thickness was 12μm, the material thereof was silicon dioxide doped with metal germanium ions, and the inner cladding was prepared using the VAD method.

(3) A sinking layer r2-r3: the relative refractive index difference $\Delta n3$ was -0.1%, the thickness was 15μm, the material thereof was fluorine-doped silicon dioxide, and the sinking layer was prepared using the VAD method.

(4) An outer cladding r3-r4: the relative refractive index difference $\Delta n4$ was 0, r3-r4 was 63μm, the material thereof was pure silicon, the outer cladding was prepared using an OVD method, and the cladding was rapidly deposited to obtain an optical fiber preform precursor with a diameter of 300mm.

After the preparation of the optical fiber preform precursor was completed, the preform was subjected to a collapsing treatment and a cooling treatment, which might include the following steps.

(1) Collapsing: the preform was placed in a collapsing furnace, the collapsing furnace was a graphite furnace, the temperature rises to 2100 °C for collapsing, the diameter of the collapsed preform was 120mm, and a mixed gas of nitrogen and high-purity oxygen was introduced into the furnace at a flow rate of 12L/min in the collapsing process. The volume percentage content of oxygen was not higher than 50%.

(2) Cooling: the collapsed preform was slowly cooled to 950 °C for 5min, the cooling rate was controlled to be 2.5 °C /s, and then the preform was naturally cooled to room temperature in the furnace.

2. Preform melting

Melting was performed on the preform 2 in a drawing furnace 3 at 2200 °C using a preform feeder 1, a heating method was graphite heating, the melting environment was filled with a helium-argon mixed gas, a 30L/min helium + 20L/min argon gas combination method was adopted for continuously introducing gas into the drawing furnace without interruption, and the oxygen concentration in the overall heating atmosphere was less than 50ppm.

3. Optical fiber annealing

1) Annealing of optical fiber in holding furnace

The optical fiber was gradually cooled from the furnace temperature to room temperature after being formed in the drawing furnace, and three sections of holding furnaces 4 were installed on a path of the optical fiber for annealing. The temperature of the first section was 1500 °C and a residence time was 0.2s; the second section was 1250 °C and the residence time was 0.2s; the third section was 950 °C and the residence time was 0.2s, the inlet temperature of the first section was 1600 °C, the outlet temperature of the third section was 920 °C and the drawing speed was 1800m/min. The whole annealing process was completed in an argon atmosphere, the oxygen content was less than 200ppm in the argon atmosphere, the argon flow rate was 15L/min, and a circulating manner of upper air intake and lower air exhaust was adopted.

2) Cooling of optical fiber in bare fiber protection tube

After exited the holding furnace, the optical fiber entered a bare fiber protection tube 6 through a bare fiber testing device 5 for further cooling. The whole cooling environment was also completed in an argon environment, the oxygen content was less than 200ppm in the argon environment, the argon flow rate was 5L/min, and the circulating manner of upper air intake and lower air exhaust was adopted. Finally, when the optical fiber exits the bare fiber protection tube, the temperature of the optical fiber drops to 200 °C.

4) Fiber coating and fiber curing in nitrogen atmosphere

After exited the bare fiber protection tube, the optical fiber was coated with an acrylic resin material in a coating device 7. A first curing was performed in a curing oven 8 after the inner coating layer was completed, coating of the outer coating layer was performed, and then a second curing was performed. The elastic modulus of the inner coating layer after curing was 0.88Mpa, the coating viscosity at 25 °C was 8000mPa·s, the coating density was 1.3g/cm$^3$, and the elongation at break after curing was 140%. The elastic modulus of the outer coating layer after curing was 750Mpa, the viscosity of the coating at 25 °C was 8000mPa·s, the density of the coating was 1.3g/cm$^3$, and the elongation at break after curing was 10%. The curing atmosphere of a single curing furnace was nitrogen, the gas flow rate of the nitrogen was 25L, the oxygen content in the curing environment was less than 50ppm, and the first of twice curing was LED curing with the degree of cure of 95%, and the second was LED curing with the degree of cure of 100%. The diameter of the optical fiber was 192mm after the first coating and 241mm after the second coating. After passed a test of an optical fiber size testing device 9, a finished optical fiber was taken up and stored by a take-up device 10.

Parameters of the optical fiber in Embodiments 1 to 8 were shown in Tables 1 to 2.

Table 1

| | Parameters of inner coating | | | | Parameters of outer coating | | | | Degree of cure | |
|---|---|---|---|---|---|---|---|---|---|---|
| | Elastic modulus/ Mpa | Viscosity at 25 °C / mPa·s | Density/ g/cm$^3$ | Elongation at break % | Elastic modulus / Mpa | Viscosity at 25 °C / mPa·s | Density/ g/cm$^3$ | Elongation at break /% | Inner layer /% | Outer layer /% |
| Embodiment 1 | 0.88 | 6500 | 1.05 | 140 | 750 | 5500 | 1.20 | 10.0 | 93 | 98 |
| Embodiment 2 | 0.61 | 8000 | 1.03 | 135 | 750 | 4800 | 1.25 | 11.0 | 92 | 96 |
| Embodiment 3 | 0.66 | 5600 | 1.08 | 130 | 810 | 5400 | 1.30 | 10.0 | 93 | 95 |
| Embodiment 4 | 0.37 | 4700 | 1.01 | 145 | 700 | 4100 | 1.30 | 13.5 | 91 | 97 |
| Embodiment 5 | 1.20 | 6200 | 1.05 | 130 | 820 | 7800 | 1.20 | 10.0 | 94 | 96 |
| Embodiment 6 | 0.91 | 7400 | 1.06 | 130 | 900 | 5700 | 1.30 | 11.0 | 95 | 99 |

Table 2

| Test item | Diameter of cladding | Diameter of coating | Mode field diameter | Cable cut-off wavelength | Attenuation at 1310nm | Attenuation at 1550nm | Bending loss at bending radius of 7.5mm |
|---|---|---|---|---|---|---|---|
| | μm | μm | μm | nm | dB/km | dB/km | dB |
| Embo dimen t 1 | 124.80 | 242.00 | 8.80 | 1213 | 0.332 | 0.185 | 0.18 |
| Embo dimen t 2 | 124.76 | 242.30 | 8.82 | 1209 | 0.328 | 0.185 | 0.20 |
| Embo dimen t 3 | 124.71 | 200.96 | 8.76 | 1225 | 0.325 | 0.184 | 0.22 |
| Embo dimen t 4 | 124.82 | 203.23 | 8.85 | 1234 | 0.321 | 0.18 | 0.25 |
| Embo dimen t 5 | 124.98 | 183.10 | 8.90 | 1243 | 0.324 | 0.184 | 0.30 |
| Embo dimen t 6 | 125.01 | 181.66 | 8.87 | 1241 | 0.330 | 0.187 | 0.31 |
| Embo dimen t 7 | 124.72 | 248.00 | 8.92 | 1231 | 0.340 | 0.192 | 0.44 |
| Embo dimen t 8 | 124.86 | 245.00 | 8.85 | 1243 | 0.342 | 0.191 | 0.43 |

It may be seen from the above that, when manufacturing the optical fiber preform, by the adoption of a design of the oblique inner cladding combined with a wide recess and shallow fluorine doping, the refractive index difference between the core layer and the sinking layer is effectively reduced, so that the optical fiber has a higher strength, at the same time, the bending resistance of the optical fiber is increased, and the bending loss is greatly reduced. The collapsed optical fiber preform adopts a specific cooling process, which not only effectively reduces the internal stress of the optical fiber preform and further improves the overall uniformity of the preform, but also effectively reduces the attenuation. In addition, natural cooling in the inert atmosphere is used instead of conventional cooling in an air environment in the cooling process after melting and drawing, which may reduce unnecessary synthesis of silicon hydroxyl on the surface of the optical fiber, thereby further reducing the internal stress of the optical fiber and effectively reducing the loss of the optical fiber.

**Claims**

1.    A preparation method of an optical fiber, wherein the optical fiber comprises a core layer, a cladding and a coating layer in sequence from inside to outside, the cladding comprises an inner cladding, a sinking layer and an outer cladding in sequence from inside to outside, and the preparation method comprises the following steps:

S1, preparing the core layer, the inner cladding and the sinking layer in sequence using a VAD process, and preparing the outer cladding using a OVD process to obtain an optical fiber preform precursor;
S2, collapsing the optical fiber preform precursor, then cooling to 800-950 °C at a cooling rate of 1.5-2.5 °C /s, holding for 1-5min, and then cooling to room temperature to obtain an optical fiber preform;
S3, performing melting and drawing on the optical fiber preform, and then annealing in an atmosphere of an inert gas to obtain a bare fiber; and
S4, coating the bare fiber to obtain the bare fiber having the coating layer on the surface, and then curing to obtain the optical fiber;
wherein a relative refractive index difference of silicon dioxide is set to be 0, and the relative refractive index difference $\Delta n1$ of the core layer is 0.34-0.38%; the relative refractive index difference $\Delta n2$ of the inner cladding decreases linearly from inside to outside, the relative refractive index difference $\Delta n2-1$ close to the core layer is 0.04-0.1%, and the relative refractive index difference $\Delta n2-2$ close to the sinking layer is 0 to -0.02%; the material of the sinking layer is fluorine-doped silicon dioxide, and the relative refractive index difference $\Delta n3$ of the sinking layer is -0.07 to -0.1%; and the relative refractive index difference $\Delta n4$ of the outer cladding is 0.

2.    The preparation method according to claim 1, wherein,

the material of the core layer is germanium-doped silicon dioxide, and the thickness of one side of the core layer is 4.5-4.9μm; and/or,

the material of the inner cladding is germanium-doped silicon dioxide, and the thickness of one side of the inner cladding is 7.5-12$\mu$m; and/or,

the thickness of one side of the sinking layer is 8-15$\mu$m; and/or,

the material of the outer cladding is pure silicon dioxide, and the thickness of one side of the outer cladding is 62-63$\mu$m.

3. The preparation method according to claim 1 or 2, wherein the diameter of the optical fiber preform precursor is 200-300mm, and the diameter of the optical fiber preform is 40-60% of that of the optical fiber preform precursor.

4. The preparation method according to any one of claims 1-3, wherein, in S2, the collapsing temperature is 1900-2200 °C, the collapsing atmosphere is a mixed atmosphere of the inert gas and oxygen, and the inert gas is one or more of nitrogen, helium, and argon; preferably, the volume percentage content of oxygen in the collapsing atmosphere is 0-50%, and the gas flow rate of the collapsing atmosphere is 6-12L/min.

5. The preparation method according to any one of claims 1-4, wherein, in S3, the melting temperature is 1800-2200 °C, and the melting atmosphere is helium and/or argon; preferably, the volume percentage content of helium in the melting atmosphere is 0-40%, the oxygen volume concentration in the melting atmosphere is <50ppm, and the gas flow rate of the melting atmosphere is 15-50L/min.

6. The preparation method according to any one of claims 1-5, wherein, in S3, the annealing comprises a first annealing and a second annealing that are performed in sequence, wherein,

the first annealing comprises n times of thermal insulation annealing, where $2 \leq n \leq 5$, and the temperatures of the first thermal insulation annealing to the nth thermal insulation annealing successively decrease; preferably, the temperature of the first thermal insulation annealing is 1400-1700 °C, the temperature of the nth thermal insulation annealing is 850-1000 °C, and the total time of the first annealing is 0.1-1s;

the second annealing is a natural cooling process; preferably, the temperature of the bare fiber obtained through the second annealing is 100-200 °C; and

more preferably, the oxygen volume concentration in the atmosphere of the inert gas is <200ppm, and the gas flow rate of the atmosphere of the inert gas is 5-25L/min.

7. The preparation method according to any one of claims 1-6, wherein, in S4, the coating layer comprises an inner coating layer close to the bare fiber and an outer coating layer far from the bare fiber;

preferably, the coating material of the inner coating layer is a first acrylic resin, the elastic modulus is $\leq$ 1.5Mpa, the viscosity at 25 °C is 3000-8000mPa·s, the density is 0.95-1.3g/cm$^3$, and the elongation at break is $\geq$ 115%; and preferably, the coating material of the outer coating layer is a second acrylic resin, the elastic modulus is $\geq$ 550Mpa, the viscosity at 25 °C is 3000-8000mPa·s, the density is 0.95-1.3g/cm$^3$, and the elongation at break is $\geq$ 5%.

8. The preparation method according to claim 7, wherein, in S4, the curing is Ultraviolet (UV) curing or Light Emitting Diode (LED) curing; preferably, the curing atmosphere is one or more of nitrogen, helium and argon, the oxygen volume concentration in the curing atmosphere is <50ppm, and the gas flow rate of the curing atmosphere is 10-25L/min; and more preferably, the degree of cure of the inner coating layer is 85-95% and the degree of cure of the outer coating layer is 92-100%.

9. An optical fiber, obtained by the preparation method according to any one of claims 1-8;

the optical fiber comprises a core layer, a cladding and a coating layer in sequence from inside to outside, the cladding comprising an inner cladding, a sinking layer and an outer cladding in sequence from inside to outside, wherein,

a relative refractive index difference of silicon dioxide is set to be 0, and the relative refractive index difference $\Delta$n1 of the core layer is 0.34-0.38%; the relative refractive index difference $\Delta$n2 of the inner cladding decreases linearly from inside to outside, the relative refractive index difference $\Delta$n2-1 close to the core layer is 0.04-0.1%, and the relative refractive index difference $\Delta$n2-2 close to the sinking layer is 0 to -0.02%; the material of the sinking layer is fluorine-doped silicon dioxide, and the relative refractive index difference $\Delta$n3 of the sinking layer is -0.07 to -0.1%; and the relative refractive index difference $\Delta$n4 of the outer cladding is 0.

**Patentansprüche**

1. Herstellungsverfahren einer optischen Faser, wobei die optische Faser eine Kernschicht, eine Ummantelung und eine Beschichtungsschicht nacheinander von innen nach außen umfasst, die Ummantelung eine innere Ummantelung, eine Senkschicht und eine äußere Ummantelung nacheinander von innen nach außen umfasst und das Herstellungsverfahren die folgenden Schritte umfasst:

   S1, Herstellen der Kernschicht, der inneren Ummantelung und der Senkschicht nacheinander unter Verwendung eines VAD-Prozesses und Herstellen der äußeren Ummantelung unter Verwendung eines OVD-Prozesses, um einen Vorläufer für eine Vorform einer optischen Faser zu erhalten;
   S2, Kollabieren des Vorläufers der Vorform der optischen Faser, dann Abkühlen auf 800 bis 950 °C mit einer Abkühlgeschwindigkeit von 1,5 bis 2,5 °C/s, Halten für 1 bis 5 Minuten und dann Abkühlen auf Raumtemperatur, um eine Vorform der optischen Faser zu erhalten;
   S3, Durchführen des Schmelzens und Ziehens an der Vorform der optischen Faser und dann des Ausglühens in einer Inertgasatmosphäre, um eine blanke Faser zu erhalten; und
   S4, Beschichten der blanken Faser, um die blanke Faser mit der Beschichtungsschicht auf der Oberfläche zu erhalten, und dann Aushärten, um die optische Faser zu erhalten;
   wobei eine relative Brechungsindexdifferenz von Siliziumdioxid auf 0 gesetzt wird und die relative Brechungsindexdifferenz $\Delta n1$ der Kernschicht 0,34 bis 0,38 % beträgt; die relative Brechungsindexdifferenz $\Delta n2$ der inneren Ummantelung von innen nach außen linear abnimmt, die relative Brechungsindexdifferenz $\Delta n2$ - 1 in der Nähe der Kernschicht 0,04 bis 0,1 % beträgt und die relative Brechungsindexdifferenz $\Delta n2$ - 2 in der Nähe der Senkschicht 0 bis -0,02 % beträgt; das Material der Senkschicht fluordotiertes Siliziumdioxid ist und die relative Brechungsindexdifferenz $\Delta n3$ der Senkschicht -0,07 bis -0,1 % beträgt; und die relative Brechungsindexdifferenz $\Delta n4$ der äußeren Ummantelung 0 beträgt.

2. Herstellungsverfahren nach Anspruch 1, wobei

   das Material der Kernschicht germaniumdotiertes Siliziumdioxid ist und die Dicke einer Seite der Kernschicht 4,5 bis 4,9 $\mu$m beträgt; und/oder
   das Material der inneren Ummantelung germaniumdotiertes Siliziumdioxid ist und die Dicke einer Seite der inneren Ummantelung 7,5 bis 12 $\mu$m beträgt; und/oder die Dicke einer Seite der Senkschicht 8 bis 15 $\mu$m beträgt; und/oder
   das Material der äußeren Ummantelung reines Siliziumdioxid ist und die Dicke einer Seite der äußeren Ummantelung 62 bis 63 $\mu$m beträgt.

3. Herstellungsverfahren nach Anspruch 1 oder 2, wobei der Durchmesser des Vorläufers der Vorform der optischen Faser 200 bis 300 mm beträgt und der Durchmesser der Vorform der optischen Faser 40 bis 60 % desjenigen des Vorläufers der Vorform der optischen Faser beträgt.

4. Herstellungsverfahren nach einem der Ansprüche 1 bis 3, wobei in S2 die Kollabiertemperatur 1900 bis 2200 °C beträgt, die Kollabieratmosphäre eine Mischatmosphäre aus dem Inertgas und Sauerstoff ist und es sich bei dem Inertgas um eines oder mehrere von Stickstoff, Helium und Argon handelt; wobei vorzugsweise der prozentuale Volumenanteil von Sauerstoff in der Kollabieratmosphäre 0 bis 50 % und die Gasdurchflussrate der Kollabieratmosphäre 6 bis 12 l/min beträgt.

5. Herstellungsverfahren nach einem der Ansprüche 1 bis 4, wobei in S3 die Schmelztemperatur 1800 bis 2200 °C beträgt und die Schmelzatmosphäre Helium und/oder Argon ist; wobei vorzugsweise der prozentuale Volumenanteil von Helium in der Schmelzatmosphäre 0 bis 40 %, die Sauerstoffvolumenkonzentration in der Schmelzatmosphäre < 50 ppm und die Gasdurchflussrate der Schmelzatmosphäre 15 bis 50 l/min beträgt.

6. Herstellungsverfahren nach einem der Ansprüche 1 bis 5, wobei in S3 das Ausglühen ein erstes Ausglühen und ein zweites Ausglühen umfasst, die nacheinander durchgeführt werden, wobei

   das erste Ausglühen n Mal thermisches Isolierausglühen umfasst, wobei $2 \leq n \leq 5$ ist und die Temperaturen des ersten thermischen Isolierausglühens bis zum n-ten thermischen Isolierausglühen sukzessive abnehmen; wobei vorzugsweise die Temperatur des ersten thermischen Isolierausglühens 1400 bis 1700 °C, die Temperatur des n-ten thermischen Isolierausglühens 850 bis 1000 °C und die Gesamtdauer des ersten Ausglühens 0,1 bis 1 s beträgt;

das zweite Ausglühen ein natürlicher Abkühlungsprozess ist; wobei vorzugsweise die Temperatur der durch das zweite Ausglühen erhaltenen blanken Faser 100 bis 200 °C beträgt; und

noch bevorzugter die Sauerstoffvolumenkonzentration in der Atmosphäre des Inertgases < 200 ppm und die Gasdurchflussrate der Atmosphäre des Inertgases 5 bis 25 l/min beträgt.

**7.** Herstellungsverfahren nach einem der Ansprüche 1 bis 6, wobei in S4 die Beschichtungsschicht eine innere Beschichtungsschicht in der Nähe der blanken Faser und eine äußere Beschichtungsschicht entfernt von der blanken Faser umfasst;

wobei vorzugsweise das Beschichtungsmaterial der inneren Beschichtungsschicht ein erstes Acrylharz ist, wobei der Elastizitätsmodul $\leq$ 1,5 MPa, die Viskosität bei 25 °C 3000 bis 8000 mPa·s, die Dichte 0,95 bis 1,3 g/cm$^3$ und die Bruchdehnung $\geq$ 115 % beträgt; und vorzugsweise das Beschichtungsmaterial der äußeren Beschichtungsschicht ein zweites Acrylharz ist, wobei der Elastizitätsmodul $\geq$ 550 MPa, die Viskosität bei 25 °C 3000 bis 8000 mPa·s, die Dichte 0,95 bis 1,3 g/cm$^3$ und die Bruchdehnung $\geq$ 5 % beträgt.

**8.** Herstellungsverfahren nach Anspruch 7, wobei in S4 das Aushärten ein Aushärten mit ultraviolettem Licht (UV) oder ein Aushärten mit Leuchtdioden (LED) ist; wobei vorzugsweise es sich bei der Aushärteatmosphäre um eine oder mehrere von Stickstoff, Helium und Argon handelt, die Sauerstoffvolumenkonzentration in der Aushärteatmosphäre < 50 ppm und die Gasdurchflussrate der Aushärteatmosphäre 10 bis 25 l/min beträgt; und noch bevorzugter der Aushärtungsgrad der inneren Beschichtungsschicht 85 bis 95 % und der Aushärtungsgrad der äußeren Beschichtungsschicht 92 bis 100 % beträgt.

**9.** Optische Faser, erhalten durch das Herstellungsverfahren nach einem der Ansprüche 1 bis 8; wobei die optische Faser eine Kernschicht, eine Ummantelung und eine Beschichtungsschicht nacheinander von innen nach außen umfasst, wobei die Ummantelung eine innere Ummantelung, eine Senkschicht und eine äußere Ummantelung nacheinander von innen nach außen umfasst, wobei

eine relative Brechungsindexdifferenz von Siliziumdioxid auf 0 gesetzt wird und die relative Brechungsindexdifferenz $\Delta n1$ der Kernschicht 0,34 bist 0,38 % beträgt; die relative Brechungsindexdifferenz $\Delta n2$ der inneren Ummantelung von innen nach außen linear abnimmt, die relative Brechungsindexdifferenz $\Delta n2$ - 1 in der Nähe der Kernschicht 0,04 bis 0,1 % beträgt und die relative Brechungsindexdifferenz $\Delta n2$ - 2 in der Nähe der Senkschicht 0 bis -0,02 % beträgt; das Material der Senkschicht fluordotiertes Siliziumdioxid ist und die relative Brechungsindexdifferenz $\Delta n3$ der Senkschicht-0,07 bis -0,1 % beträgt; und die relative Brechungsindexdifferenz $\Delta n4$ der äußeren Ummantelung 0 beträgt.

## Revendications

**1.** Procédé de fabrication d'une fibre optique, dans lequel la fibre optique comprend une couche centrale, une gaine et une couche de revêtement, dans cet ordre de l'intérieur vers l'extérieur, la gaine comprend une gaine interne, une couche de plongée et une gaine externe, dans cet ordre de l'intérieur vers l'extérieur, et le procédé de fabrication comprend les étapes suivantes :

S1, préparer la couche centrale, la gaine interne et la couche de plongée dans cet ordre à l'aide d'un procédé VAD, et préparer la gaine externe à l'aide d'un procédé OVD afin d'obtenir un précurseur de préforme de fibre optique ;

S2, effondrer le précurseur de préforme de fibre optique, puis refroidir à 800-950 °C à une vitesse de refroidissement de 1,5-2,5 °C/s, maintenir pendant 1-5 min, puis refroidir à température ambiante pour obtenir une préforme de fibre optique ;

S3, effectuer la fusion et l'étirage sur la préforme de fibre optique, puis recuire dans une atmosphère d'un gaz inerte pour obtenir une fibre nue ; et

S4, revêtir la fibre nue pour obtenir la fibre nue ayant la couche de revêtement à la surface, puis la durcir pour obtenir la fibre optique ;

dans lequel une différence d'indice de réfraction relative du dioxyde de silicium est fixée à 0, et la différence d'indice de réfraction relative $\Delta n1$ de la couche centrale est de 0,34 à 0,38 % ; la différence d'indice de réfraction relative $\Delta n2$ de la gaine interne diminue linéairement de l'intérieur vers l'extérieur, la différence d'indice de réfraction relative $\Delta n2$-1 proche de la couche centrale est de 0,04 à 0,1 %, et la différence d'indice de réfraction relative $\Delta n2$-2 proche de la couche de plongée est de 0 à -0,02 % ; le matériau de la couche de plongée est du dioxyde de silicium dopé au fluor, et la différence d'indice de réfraction relative $\Delta n3$ de la couche de plongée est comprise entre -0,07 et -0,1 % ; et la différence d'indice de réfraction relative $\Delta n4$ de la gaine externe est de 0.

2. Procédé de préparation selon la revendication 1, dans lequel

le matériau de la couche centrale est du dioxyde de silicium dopé au germanium, et l'épaisseur d'un côté de la couche centrale est comprise entre 4,5 et 4,9 $\mu$m ; et/ou
le matériau de la gaine interne est du dioxyde de silicium dopé au germanium, et l'épaisseur d'un côté de la gaine interne est comprise entre 7,5 et 12 $\mu$m ; et/ou
l'épaisseur d'un côté de la couche de plongée est comprise entre 8 et 15 $\mu$m ; et/ou
le matériau de la gaine externe est du dioxyde de silicium pur, et l'épaisseur d'un côté de la gaine externe est comprise entre 62 et 63 $\mu$m.

3. Procédé de préparation selon la revendication 1 ou 2, dans lequel le diamètre du précurseur de préforme de fibre optique est de 200 à 300 mm, et le diamètre de la préforme de fibre optique est de 40 à 60 % de celui du précurseur de préforme de fibre optique.

4. Procédé de préparation selon l'une quelconque des revendications 1 à 3, dans lequel, dans S2, la température d'effondrement est comprise entre 1900 et 2200 °C, l'atmosphère d'effondrement est une atmosphère mixte du gaz inerte et d'oxygène, et le gaz inerte est un ou plusieurs des gaz parmi l'azote, l'hélium et l'argon ; de préférence, la teneur en pourcentage de volume d'oxygène dans l'atmosphère d'effondrement est comprise entre 0 et 50 %, et le débit gazeux de l'atmosphère d'effondrement est compris entre 6 et 12 L/min.

5. Procédé de préparation selon l'une quelconque des revendications 1 à 4, dans lequel, dans S3, la température de fusion est comprise entre 1800 et 2200 °C, et l'atmosphère de fusion comporte de l'hélium et/ou l'argon ; de préférence, la teneur en pourcentage de volume d'hélium dans l'atmosphère de fusion est comprise entre 0 et 40 %, la concentration en volume d'oxygène dans l'atmosphère de fusion est inférieure à 50 ppm et le débit de gaz de l'atmosphère de fusion est compris entre 15 et 50 L/min.

6. Procédé de préparation selon l'une quelconque des revendications 1 à 5, dans lequel, dans S3, le recuit comprend un premier recuit et un deuxième recuit qui sont effectués séquentiellement, dans lequel

le premier recuit comprend n fois un recuit d'isolation thermique, où $2 \leq n \leq 5$, et les températures du premier recuit d'isolation thermique au n-ième recuit d'isolation thermique diminuent successivement ; de préférence, la température du premier recuit d'isolation thermique est comprise entre 1400 et 1700 °C, la température du n-ième recuit d'isolation thermique est comprise entre 850 et 1000 °C, et la durée totale du premier recuit est comprise entre 0,1 et 1 s ;
le deuxième recuit est un processus de refroidissement naturel ; de préférence, la température de la fibre nue obtenue par le deuxième recuit est comprise entre 100 et 200 °C ; et
de manière plus préférentielle, la concentration volumique en oxygène dans l'atmosphère du gaz inerte est inférieure à 200 ppm, et le débit gazeux de l'atmosphère du gaz inerte est compris entre 5 et 25 L/min.

7. Procédé de préparation selon l'une quelconque des revendications 1 à 6, dans lequel, dans S4, la couche de revêtement comprend une couche de revêtement interne proche de la fibre nue et une couche de revêtement externe éloignée de la fibre nue ;

de préférence, le matériau de revêtement de la couche de revêtement interne est une première résine acrylique, le module d'élasticité est $\leq$ 1,5 MPa, la viscosité à 25 °C est de 3 000 à 8 000 mPa·s, la densité est de 0,95 à 1,3 g/cm$^3$ et l'allongement à la rupture est $\geq$ 115 % ; et
de préférence, le matériau de revêtement de la couche de revêtement externe est une deuxième résine acrylique, dont le module d'élasticité est $\geq$ 550 MPa, la viscosité à 25 °C est de 3000 à 8000 mPa•s, la densité est de 0,95 à 1,3 g/cm$^3$ et l'allongement à la rupture est $\geq$ 5 %.

8. Procédé de préparation selon la revendication 7, dans lequel, dans S4, le durcissement est un durcissement par ultraviolets (UV) ou par diode électroluminescente (LED) ; de préférence, l'atmosphère de durcissement comporte un ou plusieurs des gaz suivants : azote, hélium et argon, la concentration volumique en oxygène dans l'atmosphère de durcissement est inférieure à 50 ppm, et le débit gazeux de l'atmosphère de durcissement est compris entre 10 et 25 L/min ; et de manière plus préférentielle, le degré de durcissement de la couche de revêtement interne est compris entre 85 et 95 % et le degré de durcissement de la couche de revêtement externe est compris entre 92 et 100 %.

9. Fibre optique obtenue par le procédé de préparation selon l'une quelconque des revendications 1 à 8 ;

la fibre optique comprend une couche centrale, une gaine et une couche de revêtement, dans cet ordre de l'intérieur vers l'extérieur, la gaine comprenant une gaine interne, une couche de plongée et une gaine externe, dans cet ordre de l'intérieur vers l'extérieur, dans laquelle

une différence d'indice de réfraction relative du dioxyde de silicium est fixée à 0, et la différence d'indice de réfraction relative $\Delta n1$ de la couche centrale est comprise entre 0,34 et 0,38 % ; la différence d'indice de réfraction relative $\Delta n2$ de la gaine interne diminue linéairement de l'intérieur vers l'extérieur, la différence d'indice de réfraction relative $\Delta n2\text{-}1$ proche de la couche centrale est comprise entre 0,04 et 0,1 %, et la différence d'indice de réfraction relative $\Delta n2\text{-}2$ proche de la couche de plongée est comprise entre 0 et -0,02 % ; le matériau de la couche de plongée est du dioxyde de silicium dopé au fluor, et la différence d'indice de réfraction relative $\Delta n3$ de la couche de plongée est comprise entre - 0,07 et -0,1 % ; et la différence d'indice de réfraction relative $\Delta n4$ de la gaine externe est de 0.

Fig. 1

Fig. 2

Fig. 3

**EP 4 371 950 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111323872 A

- CN 113582534 A